Europäisches Patentamt

European Patent Office (11) Publication number: **0 203 512**

Office européen des brevets A1

# EUROPEAN PATENT APPLICATION

(21) Application number: 86106897.1

(22) Date of filing: 21.05.86

(51) Int. Cl.⁴: **G 06 F 15/21,** G 09 F 27/00, H 04 N 5/64

(30) Priority: **29.05.85 IT 2094685**

(43) Date of publication of application: **03.12.86** **Bulletin 86/49**

(84) Designated Contracting States: **AT BE CH DE FR GB LI LU NL SE**

(71) Applicant: **Galata', Francesco, Via Cisa Interna, 33, I-19038 Sarzana (La Spezia) (IT)** Applicant: **Barsi, Domenico, Viale Castracani, 29, I-55100 Lucca (IT)**

(72) Inventor: **Galata', Francesco, Via Cisa Interna, 33, I-19038 Sarzana (La Spezia) (IT)** Inventor: **Barsi, Domenico, Viale Castracani, 29, I-55100 Lucca (IT)**

(74) Representative: **Lecce, Giovanni, Ufficio Internazionale Calciati S.r.l. Via G. Negri 10, I-20123 Milano (IT)**

(54) Device for the automatic display of personnel and service shifts occuring in programmed, constant, cadenced succession, particularly in the case of pharmacies.

(57) For the automatic display of personnel on duty or service shifts, when such shifts are sequential and with a constantly programmed rythm, a device has been developed composed of a display (4) and a console (5) containing a microprocessor with RAM storage, a ROM non-volatile storage, a reading unit and a power supply unit.

The device can be installed in a wall, outside the store's premises as by way for example, of a pharmacy, or set up as a cabinet in the show window.

- 1 -

DEVICE FOR THE AUTOMATIC DISPLAY OF PERSONNEL AND SERVICE SHIFTS OCCURING IN PROGRAMMED, CONSTANT, CADENCED SUCCESSION, PARTICULARLY IN THE CASE OF PHARMACIES.

This invention relates to a device for automatically displaying personnel on duty or service shifts following each other consecutively with a constantly programmed cadence, particularly suited for utilization by pharmacies, chemist's shops or drug 5stores, to indicate those open for service.

As it is well known, there are public service activities that must be available to the public, even if only partially, but on a full time around the clock basis. For this reason, some businesses to be available in case of emergencies are appointed to perform their activities in rotation during the periods of inactivity of the major portion of their clientele. Under this class of services are to be listed, by way of example, first aid stations, emergency services, ambulances, taxis, etc. These services organize themselves around a centralized call station, that calls upon those available at the moment.

There is an additional number of services, that are more widespread, from gasoline service stations to pharmacies, where service during normal closing hours is delegated to a reduced number of shops or outlets that remain on duty periodically of the whole 24 hours period, or for a substantial number of extra hours. The shifts

- 2 -

are programmed and established for a long period of time, annually by way of example, by resorting to repetitive shift assignments. It is advantageous for all the interested parties in each sector and it is compulsory for pharmacies and pharmaceutical distributing outlets, to display the addresses of the other available outlets on duty: the display consists generally in an illuminated board set up near the shop's entrance during the whole day and for the whole year. Each trade is compelled therefore to display on a lit-up board the name or names and relative addresses of the other zonal outlets open for shift duty. The display has to be updated every week. This can create some problems, both to customers as well as to pharmacy owners. The boards are of limited size, lightning is dim and often missing altogether due to the sudden failure of the small light bulb. In addition the shift operators which generally begin their tour of duty on a saturday or sunday have to be announced at the exact moment of shift change-over, to avoid giving misleading information to the consumer.

During certain very long shut-down periods as, by way of example, vacations or holidays, it becomes necessary to change the shift table more than once, or instead, more than one table has to displayed to cover the extended period. For these reasons, it is convenient for both, the user of the service as well as its supplier, to have available a well illuminated screen where, without operator intervention, the on-duty shift outlets are reported in automatic sequence.

- 3 -

This invention, as featured by the claims, solves the problem under consideration by making available a completely automatic device operating as follows: after input and recording of the shift tables, (operation undertaken initally by the installer) the device provides a clear, updated display, with exactly timed board changes, valid over a long period of time, even up to a year, without the requirement for any operator intervention or assistance at the end of each shift.

The operator must only insert a nonvolatile storage (in the simplest case a magnetic tape), press a key on the keyboard and answer the questions submitted by the program: time and date of input. Afterwards the device will operate all by itself, being also able to signal its own date of expiry.

The device utilizes readily available electronic components, mounted in such a way that the required service is carried out with precision and reliability.

To understand better this invention, it is described hereinbelow in detail, with references to the figures in the attached drawing which show a preferred embodiment, by way of non limiting example and in which:

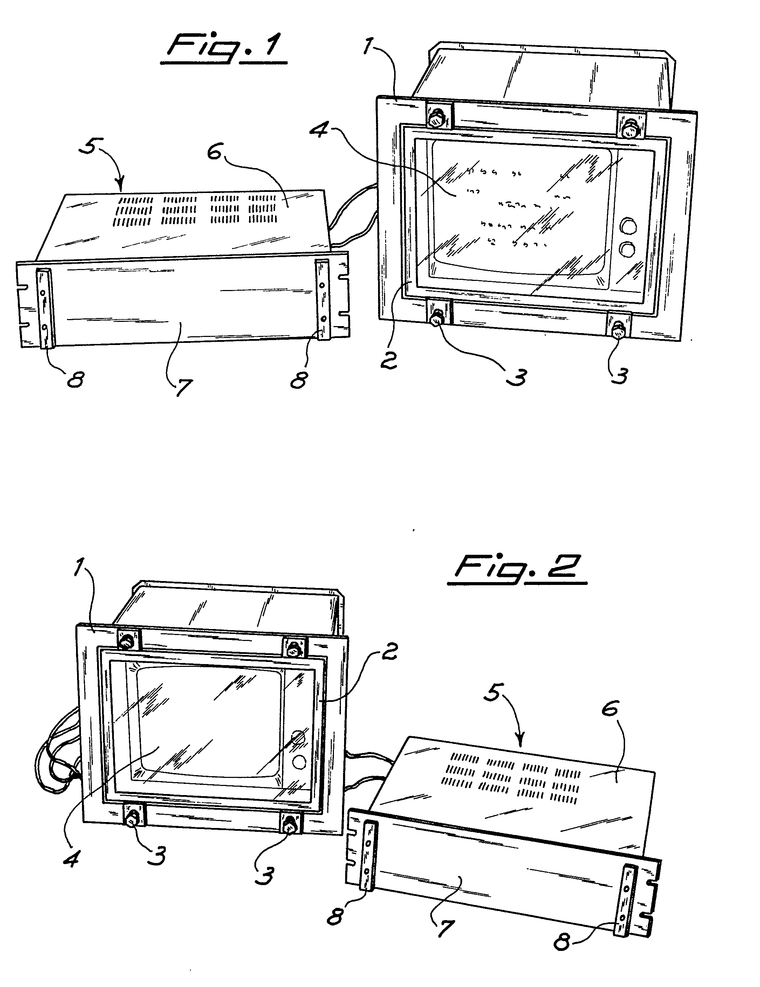

Fig. 1 is a schematic front view of the two basic units of the device to be installed in the selected location;

Fig. 2 is a schematic front view of the two units shown in Fig. 1, ready to be installed;

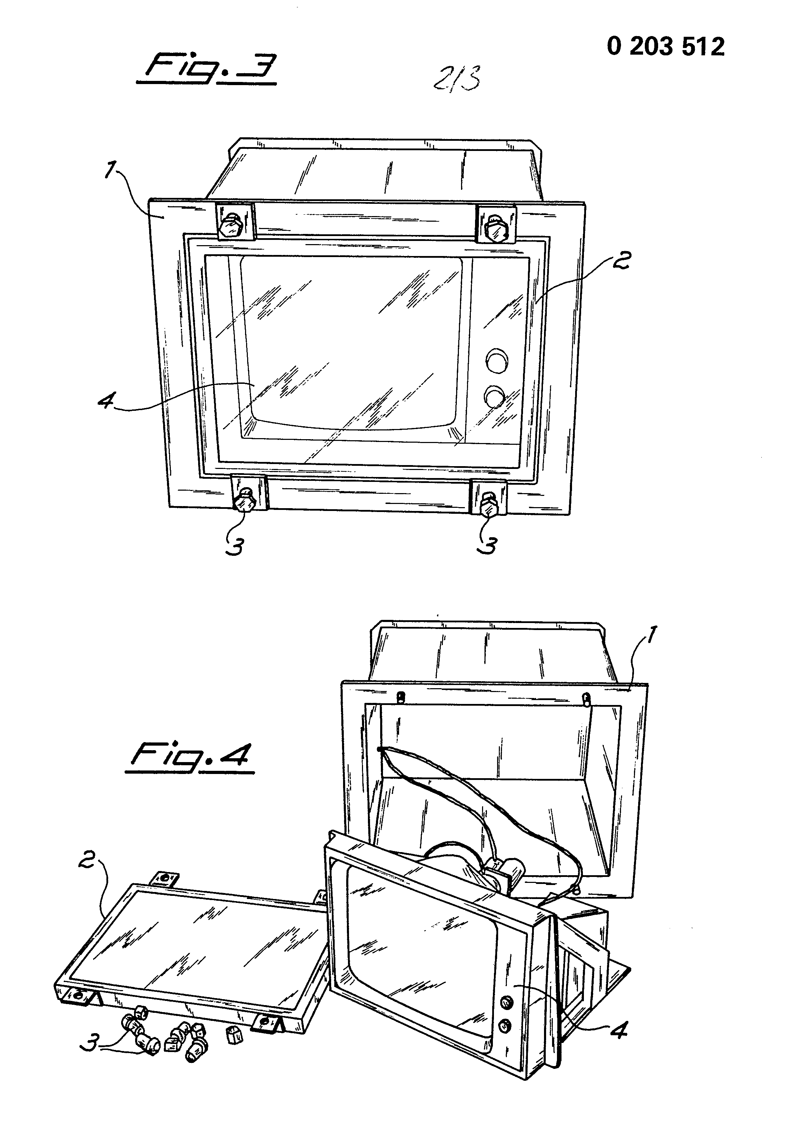

Fig. 3 is a schematic front view of the complete armoured

- 4 -

enclosure ready for installation in a wall recess

Fig. 4 is a schematic front view of the enclosure shown in Fig. 2, partially disassembled for maintenance;

Fig. 5 is a schematic front view of the electronic console of the device, shown closed for installation in control panels or in cabinets inside the premises;

Fig. 6 is a schematic top view of the device's electronic console, illustrated in Fig. 5, but without cover, to show the circuits and for contingent maintenance work.

With reference to the above detailed figures, the device according to this invention includes a welded armored container 1, with a removable front piece 2, watertight and with a safety glass, secured by four sealed tamper-proof bolts 3.

Container 1 can be installed outside the premises, generally in a wall recess as it is already protected from atmospheric corrosion and is weatherproofed. Dispaly 4 is installed inside said container 1. Display 4 can be of any known type as, by way of example, a cathode ray tube or an LCD (liquid crystal display) panel. Where the show-window is always in view, container 1 can become a simple cabinet in the show-window itself. Display 4 is connected to console or drawer support 5 by watertight cables and core hitches. Console or support 5 contains the remaining electronic circuits and can be installed inside the premises, either supported on brackets or inside a cabinet, from where it can be extracted. Console 5 contains the following functional elements:

- 5 -

a) A microprocessor unit equipped with a RAM storage unit of sufficient capacity to meet requirements

b) A nonvolatile storage (magnetic tape, ROM, etc.) for semi-permanent data storage with a reader unit as, by way of example, a tape recorder for a magnetic tape unit

c) A back up power supply, that is a storage battery with the relevant floating recharging device, to assure temporary power supply in the event of network power failure.

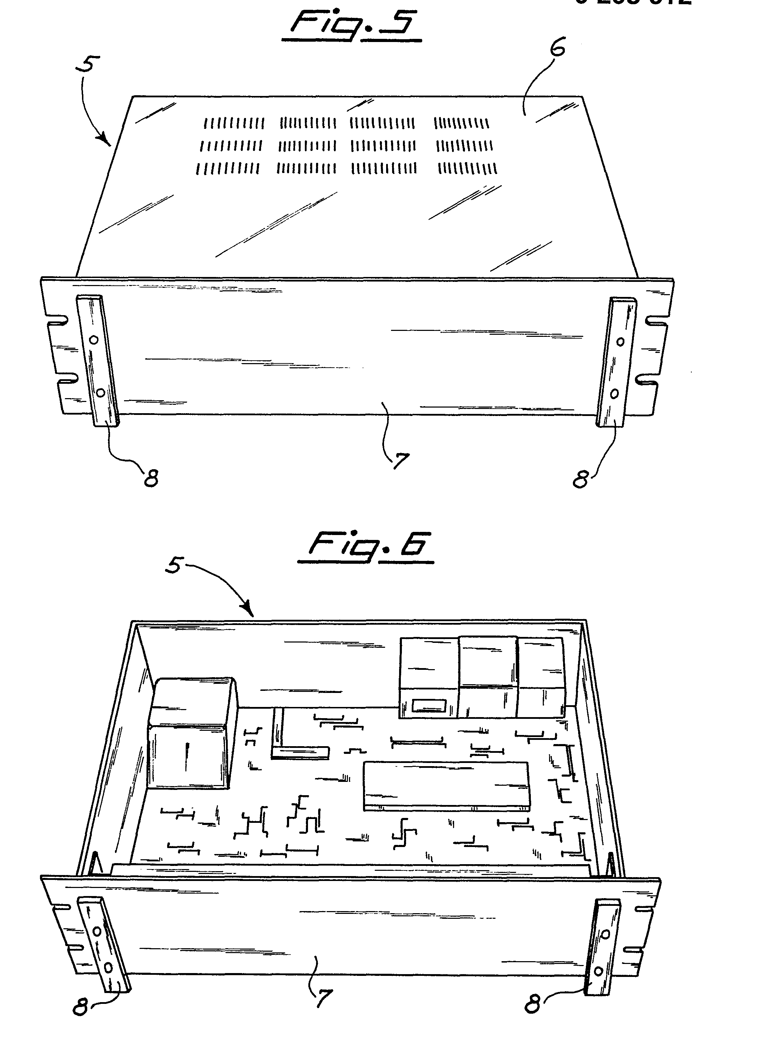

Console 5 shows all circuits and components laid-out and interconnected on a single board: for this reason each one of them is accessible for servicing as, by way of example, for the substitution of the floating battery. The whole unit is protected by a fixable cover 6 so that console 5 appears as shown in Fig. 5; the unit can be handled by using handles 8 set on the front cover 7, and it can be disconnected and inspected as shown in Fig. 6.

A COMMODORE VIC-20 type computer, widely available on the market has been used for the simplest embodiment, but it can be subsituted by other equivalent computer types available on the market or custom made expressly for this service.

The installer must only assure the assistance required for mounting the display, either inside the show-window or outside the premises in the armored container, for making the required connections so that the console can be mounted inside the premises in a readly accessible location, for tying-in to the electrical power network, for recommending the software required for operating the

- 6 -

device, for introducing the tape with the record of the programmed shifts, timed in real time.

The installer has no other duty, with the exception of changing the tape when the shift program has to be modified, or for battery substitution, scheduled every four years, or for cathod-ray tube substitution when its luminosity becomes substantially dimmer.

It is clear that in addition to the data concerning shift operators as, by way of example, name and address of the pharmacy on duty, one can program on the same device also additional data as, for instance, the phone number of the ambulance service, the first-aid center or the doctor on duty.

And, as last, one can have a fixed type display if all the data items to be presented can be held in one video screen, or a paging display when the data items are too many for a clear presentation in one screen and it is desirable to exert a greater pull on the attention of the reader. As a matter of fact, the video screens could also display promotional or information messages.

- 7 -

CLAIMS

1) A device for the automatic display of on duty personnel and service shifts, when they are sequential and with a constantly programmed rythm for a given period, characterized by the fact of having:

a) a display 4, a cathodic ray tube or LCD (liquid crystal display), installed outside the premises in a container 1, protected from humidity and atmospheric contamination;

b) a console 5 containing a microprocessor unit equipped with RAM storage, a non-volatile storage ROM and their relevant reading device, power supply and back up power supply, the whole enclosed by a watertight cover 6, so that it can be located inside the premises either on a shelf or inside a cabinet;

c) electrical connections to the electrical power network and all cables and wiring required for connecting the display unit to the control console.

2) A device according to claim 1, characterized by having an armored container 1, installable in a wall recess, supplied with a removable safety glass front panel 2, secured with tamper-proof bolts.

3) A device, according to claim 1 or 2, characterized by the fact that container 1 is a cabinet set in a show window.

4) A device, according to claim 1 to 3, characterized by the fact that it displays for each shift the names and addresses of pharmacies on full time (24 hours service) or with an extended

- 8 -

service schedule, with automatic change at the end of each shift over long periods of time, without direct intervention from operating personnel and without solution of continuity.

_Fig.1_

_Fig.2_

*Fig.3*

2/3

0 203 512

*Fig.4*

## Fig. 5

## Fig. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A | PATENTS ABSTRACTS OF JAPAN, vol. 6, no. 206 (P-149)[1084], 19th October 1982; JP - A - 57 111 658 (TATEISHI DENKI K.K.) 12-07-1982 * Abstract; figures * | 1 | G 06 F 15/21 G 09 F 27/00 H 04 N 5/64 |
| A | EP-A-0 120 771 (COMPAGNIE INDUSTRIELLE DES TECHNIQUES POUR L'INFORMATIQUE, CITI, SA) * Claims 1,2; page 1, lines 21-28; figure * | 1,2 | |
| A | BE-A- 896 593 (R. CAMPS et al.) * Claims 1,5,6; page 4, line 19 - page 5, line 4; page 5, line 26 - page 6, line 14; figure * | 1 | |
| A | GB-A- 850 653 (BLAUPUNKT-WERKE) * Claim 1; page 1, lines 30-57; figure * | 2 | TECHNICAL FIELDS SEARCHED (Int. Cl.4) G 09 F G 09 B G 06 F H 04 N |

The present search report has been drawn up for all claims

| Place of search | Date of completion of the search | Examiner |
|---|---|---|
| THE HAGUE | 03-09-1986 | BURGAUD C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82